# EUROPEAN PATENT APPLICATION

(11) **EP 4 786 806 A1**
(43) Date of publication of application: **05.08.2026**
(21) Application number: 25155606.4
(22) Date of filing: 03.02.2025
(51) Int. Cl.: F16B 21/06, F16B 21/07

(54) **FASTENER ELEMENT, FASTENER SET AND CORRESPONDING METHODS**

(71) Applicant: Newfrey LLC, New Britain, CT 06053 (US)
(72) Inventor: Kempf, Christian, 35394 Giessen (DE); Köhler, Robert, 35394 Giessen (DE); Rosemann, Frank, 35394 Giessen (DE); Pimper, Ralf, 35394 Giessen (DE)
(74) Representative: Witte, Weller & Partner Patentanwälte mbB

(57) **Abstract**

A fastener element (10) for the attachment of a clip (40) in relation to a component (C) to which the fastener element (10) is joined, comprising a shaft (12) that extends in a longitudinal direction (L) and has a first shaft end (14) and a second shaft end (16) in the longitudinal direction, the first shaft end (14) being designed to be joined to the component (C), a head (18) having, in the longitudinal direction (L), a first head end (20) and a second head end (22), the first head end (20) being connected to the second shaft end (16) and having a lower face (24) projecting with respect to the shaft (12) transversely to the longitudinal direction (L), the head (18) being designed to be engaged by an elastic retaining arrangement (46) of a clip (40) in a fixing position, and an axial projection (30) which projects in the longitudinal direction (L) with respect to the second head end (22) by a projection height (LP) greater than zero.

## Description

The present disclosure relates to a fastener element for the attachment of a clip in relation to a component to which the fastener element is joined, comprising a shaft that extends in a longitudinal direction and that is designed to be joined to the component, and a head designed to be engaged by an elastic retaining arrangement of a clip in a fixing position.

Further, the present disclosure relates to a set of a fastener element and a plastic clip, wherein the clip has an elastic retaining arrangement for axially retaining the clip on the head of the fastener element. In addition, the present disclosure relates to a method for manufacturing a fastener element, and to a method of producing a connection arrangement using such fastener element.

In the field of fastening technology, it is known for long to use fastener elements, such as welding studs, as fastening anchors which are joined to a component, such as a vehicle body sheet. In the field of manufacturing vehicle bodies, it is known to join fastener elements to the vehicle body, such that they stand erect from a surface thereof. Such studs may have a variety of functions, particularly when used in connection with a plastic clip. The plastic clip is typically adapted to be latchingly attached to the fastener element. The clip may be adapted to hold a member such as a lining member between the surface of the vehicle body and the clip itself. In other applications, the clip has at least one receptacle for receiving a member such as a wiring harness, an electrical line, a fluid hose (e.g. a breaking fluid hose or a cooling water hose), etc.. In this case, the member is held by the clip which itself is attached to the fastener element, which itself is joined to the vehicle body, e.g. by welding, glueing, or other fastening technology (e.g. screwing, riveting, etc.).

Depending on the applications and the loads involved, there exist numerous types of fastener elements and numerous types of clips. The clips are typically plastic clips which are produced by injection molding processes. In some cases, the shapes of the clips can be quite complicated, and it is also known to implement the clips with multiple materials having different hardnesses.

One type of fastener elements has a flange to be joined to the component (e.g. vehicle body), and a shaft which includes an outer thread. The clip has a corresponding receptacle for receiving the shaft and an elastic retaining arrangement for attaching the clip to such fastener element. The elastic retaining arrangement typically includes elastically deflecting arms or noses, etc. In some cases, the clip can be detached from the fastener element, either using detachment forces which are higher than typical retaining forces, or by specific features for unlocking the retaining arrangement.

Another type of fastener element has a shaft with a first and a second end, wherein the first end is designed to be joined to a component. The other shaft end is connected to a fastener element head which has a diameter that is larger than the diameter of the shaft.

Document DE 20 2009 015 837 U1 relates to such type of stud, wherein an underside of the head includes an area with increased friction.

This document also shows a clip to be fastened to the stud, wherein the clip includes a number of elastically deflectable retaining portions which are suitable for engaging the underside of the fastener element head.

Further fastener elements having a shaft and a head with an enlarged diameter are known from documents DE 10 2006 038 991 A1, DE 10 2011 018 525 A1, DE 10 2007 042 037 A1, and WO 2012/097298.

Against this background, it is an object of the present disclosure to provide an improved fastener element, an improved fastener set, an improved manufacturing method and an improved method of producing a connection arrangement.

The above object is achieved by a fastener element for the attachment of a clip in relation to a component to which the fastener element is joined, comprising (i) a shaft that extends in a longitudinal direction and has a first shaft end and a second shaft end in the longitudinal direction, the first shaft end being designed to be joined to the component, (ii) a head having, in the longitudinal direction, a first head end and a second head end, the first head end being connected to the second shaft end and having a lower face projecting with respect to the shaft transversely to the longitudinal direction, the head being designed to be engaged by an elastic retaining arrangement of a clip in a fixing position, and (iii) an axial projection which projects in the longitudinal direction with respect to the second head end by a projection height greater than zero.

The fastener element has a shaft and a head. The head has a lower face which projects with respect to the shaft transversely to the longitudinal direction. Preferably, the outer diameter of the head is larger than the outer diameter of the shaft. In this case, the lower face is preferably an underside of the head.

The head is designed to be engaged by an elastic retaining arrangement of a clip in a fixing position. Preferably, the elastic retaining arrangement engages the lower face of the head.

The axial projection, in the fixing position, is preferably also engaged by the clip. The axial projection may either be engaged by a rigid body portion of the clip, or by a part of the elastic retaining arrangement.

The fastener element and the clip are adapted to each other. Preferably, they are adapted to each other in consideration of a certain thickness of a coating layer which is applied to the fastener element before the clip is attached thereto. The coating layer, preferably, is a paint layer which is applied to the fastener element after being joined to the component (e.g. a vehicle body part).

The axial projection is preferably adapted to compensate for different coating thicknesses in different applications. The thickness of coating may vary from one application (for example a certain vehicle type) to another application (for example another vehicle type). If the coating thickness is low for a given pairing of a fastener element and a clip, the rattling may occur in the prior art (e.g. using a stud head without axial projection). On the other hand, if the coating thickness is too thick, the elastic retaining arrangement may be stressed beyond its specification, or may even break, in the prior art.

A change of the clip to different coating thicknesses would require expensive injection molding tools for each type of coating thickness. On the other hand, the axial projection of the fastener element may be varied within reasonable cost frame, for example by a variable length of an ejector pin of a tool for forming the fastener element.

The axial projection of the present disclosure is preferably configured to be engaged by the clip in the fixing position. Therefore, different types of fastener elements with different projections heights may be used for different applications involving different coating thicknesses, for example, wherein, in each of these cases the same clip may be attached thereto.

Therefore, rattling can be avoided in each of those applications, and the deflection of the elastic retaining arrangement can be kept within reasonable ranges, particularly within the specification for which the clip is designed.

In a preferred embodiment, the fastener element is adapted to be joined to a component in a rigid, non-detachable manner, e.g. by welding, glueing, riveting, etc.

The engagement of the clip at the head of the fastener element is preferably releasable by nature, e.g. by a release force to the clip which is significantly higher than a retaining force.

The projection head of the axial projection is preferably greater than 0.025 mm. Further, it is preferred if the projection head is smaller than 2 mm, preferably smaller than 1.5 mm, and in particular smaller than 1.2 mm.

It is particularly preferred if the projection height is variable within the above-mentioned upper and lower limits, so as to adapt the fastener element to a certain application, e.g. to a specific coating thickness, as described above.

The object is achieved in full.

In a preferred embodiment, the lower face of the head is designed to be engaged by at least one first elastic retaining portion of the elastic retaining arrangement.

The first elastic retaining portion, typically, is realized by a latching nose or by a number of latching noses arranged so as to be distributed around the circumference of the fastener element.

Further, although the axial projection might be engaged by a rigid portion of the clip, it is preferred if the axial projection is designed to be elastically engaged by at least one second elastic retaining portion of the elastic retaining arrangement of the clip.

Preferably, the first elastic retaining portion and the second elastic retaining portion are arranged on different axial sides of the head. In other words, the first elastic retaining portion is preferably adapted to engage a lower face of the head, e.g. an underside of the head. On the other hand, the second elastic retaining portion is preferably adapted to elastically engage an upper face of the axial projection, which faces away from the shaft. Therefore, the head is preferably elastically held between the first and second elastic retaining portions in the fixing position.

As described above, it is preferred if the fastener element is configured to be coated with a layer of a coating having a predetermined coating thickness, and wherein the projection height is configured to correspond to the predetermined coating thickness.

In other words, the projection height of the axial projection, preferably, is a function of the coating thickness of the coating layer to be applied to the fastener element.

In this context, it is preferred if the projection height relates reciprocally to the predetermined coating thickness.

In other words, if the coating thickness is large, the projection height of the axial projection is small, and vice versa.

Further, it is preferred overall if the head, in a longitudinal cross-section, has an approximately elliptic shape, so that the diameter of the head is larger than an axial height of the head.

Further, the axial projection may have an arbitrary shape. However, it is preferred if the axial projection is a cylindrical projection.

Such a cylindrical projection preferably has a top surface which is aligned in a radial plane with respect to the longitudinal axis of the fastener element. In this case, the clip may engage the axial projection in a manner which is balanced around the circumference of the fastener element.

In another preferred embodiment, an outer diameter of the axial projection is smaller than an outer diameter of the head.

This allows to manufacture different fastener elements with only few changes in the tool. Particularly, the changes of the tool might imply a change of an axial length of an ejector pin, for example.

Further, it is preferred if the outer diameter of the axial projection is smaller than an outer diameter of the shaft.

This contributes to facilitating manufacturing of the fastener element as well.

In another preferred embodiment, a ratio of an outer diameter of the axial projection to an outer diameter of the head is in a range from 0.25 to 0.7, preferably in a range from 0.3 to 0.6, and particularly preferred in a range from 0.3 to 0.5.

In another preferred embodiment, a ratio of an outer diameter of the axial projection to an outer diameter of the shaft is in a range from 0.4 to 0.95, particularly in a range from 0.5 to 0.9, preferably in a range from 0.6 to 0.8.

Further, it is preferred if a ratio of the axial length of the head to the projection height of the axial projection is in a range from 152 to 1.9.

The wide projection height range is configured to cover different types of application. In some applications, the projection height might be very small in comparison to the axial length of the head. In other applications, the projection height might be almost half as long as the axial length of the head.

The ratio of axial length of the head to projection height of the axial projection, preferably is in a range from 140 to 2.5.

In other words, the projection height is selectable within this range so as to assume one value of this range, depending on the application, e.g. depending on the coating thickness.

Further, it is preferred if the lower face of the head comprises an annular conical face portion with a cone angle in a range from 90° to 130°.

In addition, it is preferred if the lower face of the head comprises a roughened portion having an increased surface roughness.

Particularly, the surface roughness of the lower face is higher than the surface roughness of the rest of the head. The roughened portion may have an arithmetic average roughness RA in a range from 3 µm to 10 µm, particularly in a range from 3 µm to 6 µm. Alternatively, or additionally, the lower surface of the head may be provided with at least one circumferential groove, particularly with several circumferential grooves, each groove preferably having a depth of 200 µm to 400 µm.

In another preferred embodiment, a ratio of an outer diameter of the head to an outer diameter of the shaft is in a range from 0.4 to 0.75, particularly in a range from 0.5 to 0.65.

The above ratios and dimensions each contribute to the solution of the object of the present disclosure.

The above object is also achieved by a set of a fastener element as defined above, and a plastic clip, wherein the plastic clip has an elastic retaining arrangement for axially retaining the head of the fastener element.

In a preferred embodiment, the clip comprises an elastic retaining arrangement which includes at least one first elastic retaining portion for engaging a lower face of the head of the fastener element, and at least one second elastic retaining portion for engaging the axial projection of the fastener element.

In this case, it is preferred if the at least one first elastic retaining portion and the at least one second elastic retaining portion are configured to perform respective axial retaining forces on the head of the fastening element, which act in opposite directions.

In this embodiment, the head is held elastically in both axial directions, so that rattling can be kept low.

Further, it is preferred if the clip includes a receptacle for receiving the head of the fastening element, and wherein the receptacle includes a stop surface which is configured to limit movements of the received head by the at least one first elastic retaining portion.

In other words, the clip is adapted to limit movements of the received head in a direction in which the second elastic retaining portion would be further deflected.

The above object is also achieved by a method for manufacturing a fastener element which has a head and an axial projection projecting from a surface of the head, particularly a fastener element as defined above, the method comprising the steps of (i) determining/selecting a projection height of the axial projection so as to correspond to a predetermined coating thickness of a coating layer which is to be applied to the fastener element, and (ii) manufacturing the fastener element with the determined projection height.

Further, the above object is achieved by a method of producing a connection arrangement, comprising the steps of (i) providing a fastener element as defined above, (ii) joining the fastener element to a component, (iii) coating the component with the fastener element joined thereto, and (iv) attaching a clip to the fastener element so as to produce the connection arrangement.

The connection arrangement might be used to clamp a member between the clip and the component. In other applications, a longitudinal member (e.g. a fluid tube or an electrical wiring harness) can be attached to the clip, for attaching the member to the component via the clip and the fastener element.

It is clear that the above-mentioned and hereinafter still to be described features are not only usable in the respectively combination, but also in other combinations or alone, without departing from the scope of the present invention.

Embodiments of the invention are depicted in the drawings and will be explained in more detail in the following description. In the drawings:
- Fig. 1: is a schematic perspective view of a fastener element;
- Fig. 2: is a side view of the fastener element of Fig. 1;
- Fig. 3: is a perspective view fastener set with of a clip into which the fastener of Fig. 1 has been inserted;
- Fig. 4: is a longitudinal cross section of the clip and the fastener element of Fig. 3;
- Fig. 5: is a schematic view of two different fastener elements to which different coating thicknesses are applied;
- Fig. 6: is a schematic view of a first part of a tool for manufacturing a fastener element; and
- Fig. 7: is a schematic view of a second part of a tool for manufacturing a fastener element.

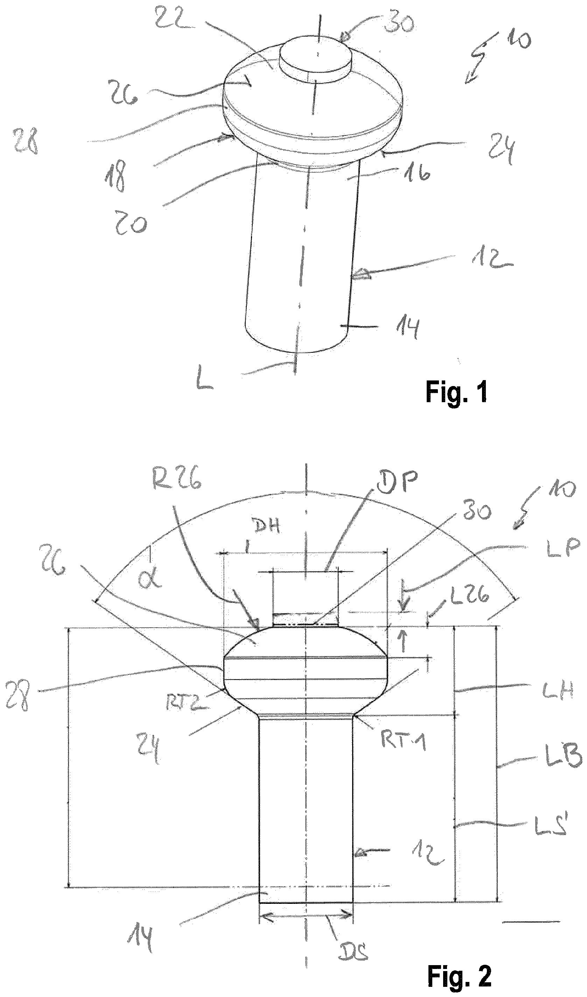

In figures 1 to 4, a fastener element is generally shown and designated with 10. The fastener element 10 includes a shaft 12. The shaft 12 has a first shaft end 14 and a second shaft end 16 in a longitudinal direction as defined by a longitudinal axis L.

Further, the fastener element includes a head 18 which has a first head end 20 and a second head end 22 in the longitudinal direction.

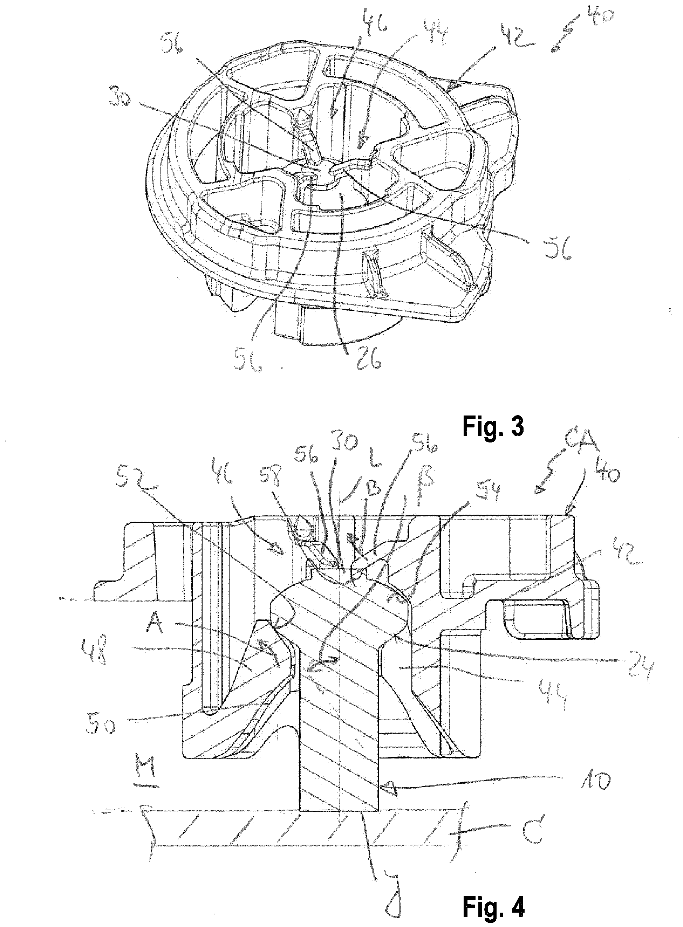

The first shaft end 14 is configured to be joined to a component C (cf. Fig. 4). The second shaft end 16 is connected with the first head end 20.

The head 18 and the shaft 12 of the fastener element 10 are integrally formed. Particularly, the fastener element 10 is made of a metal material, particularly a steel material. However, the fastener element could also be made of a plastic material, e.g. a hard plastic material like PA, PE, PP, etc.

Further, the first shaft end 14 may be configured to be welded to a component C, e.g. a vehicle body. The welding step, preferably, is made with accessibility from only one side of the component C, e.g. by stud welding. In the case of a plastic fastener element, it may be glued to a component C or may be or thermoplastically welded to a component which itself is made of plastic material.

The head 18 has a lower face 24 facing to the shaft 12, and an upper face 26. Further, the head 18 may have an intermediate portion 28 which is located axially between the lower face 24 and the upper face 26.

In addition, the fastener element 10 comprises an axial projection 30 which projects in the longitudinal direction L with respect to the second head end 22 by a projection height LP greater than zero.

As shown in Fig. 2, the shaft 12 has a shaft length LS and a shaft outer diameter DS. The head 18 has a head length LH which is smaller than LS.

The shaft 12 and the head 18, together, have a base length LB. The total length of the fastener element 10 is the sum of the base length LB and the projection height LP of the axial projection 30.

The head 18 has a head outer diameter DH which is defined by the intermediate portion 28. Further, the upper face 26 of the head may extend over an axial upper face length L26.

The upper face 26 is defined by an upper face radius R26. The lower face 24 is essentially formed by an annular conical face portion with a cone angle α in a range from 90° to 130°.

A transition between the second shaft end 16 and the first head end 20 is defined by a radius RT1. A transition between the annular conical face portion of the lower face 24 and the intermediate portion 28 is defined by a transition radius RT2. RT1 < RT2 < R26.

The fastener element 10 may have the following dimensions:

| | |
|---|---|
| LH | 3.8 mm |
| LB | 11.8 mm |
| DS4 | 4.0 mm |
| DH | 7.0 mm |
| DP | 2.8 mm |
| RT1 | 0.3 mm |
| RT2 | 1.0 mm |
| R26 | 3.5 mm |
| L26 | 1.3 mm |
| α | 110° |

Figures 3 and 4 show a clip 40 which is adapted to be used in combination with the fastener element 10. The clip 40 includes a clip base 42 which has a generally annular form with respect to a longitudinal axis L. The clip base 42 defines a receptacle 44 for receiving a part of the fastener element 10, particularly the head 18 and at least a part of the shaft 12.

Within the receptacle 44, an elastic retaining arrangement 46 is provided which is adapted to engage at least the head 18 of the fastener element 10 in a fixing position.

The elastic retaining arrangement 46 includes first elastic retaining portions 48, particularly three or more and less than seven first elastic retaining portions 48. Each first elastic retaining portion 48 extends from a lower end of the clip 40, via which the fastener element 10 is introduced into the receptacle 44, in an inclined direction with respect to the longitudinal axis. Each first elastic retaining portion 48 may be deflected elastically in a direction radially outwardly, as indicated by an arrow A.

Each first elastic retaining portion 48 includes a deflection surface 50 which faces to the lower end of the clip 40. The deflection surface 50 is configured to be engaged by the upper face 26 of the head 18 when the fastener element 10 is axially introduced into the receptacle 44. Due to this engagement, the first elastic retaining portions 48 are deflected radially outwardly, as indicated by the arrow A.

Each first elastic retaining portion 48 includes a retaining surface 52. The retaining surface faces generally upwardly. As soon as an innermost portion of each first elastic retaining portion 48, which is axially arranged between the deflection surface 50 and the retaining surface 52, has passed the intermediate portion 28, the first elastic retaining portions 48 may move back radially inwardly due to their elastic restoring force (i.e. in a direction opposite to the arrow A). Finally, the retaining surface 52 engages the lower face 24 of the head 18, thereby latchingly retaining the fastener element 10 in an axial direction.

The retaining surface 52, in the fixing position as shown in Fig. 4, is arranged at an angle β with respect to the longitudinal axis. The angle β of the retaining surface 52 and the cone angle α of the lower face 24 determine at which force the fastener element 10 can be released/retracted from the receptacle 44. Here, the lower face 24 may be provided with a roughened portion so as to increase the surface roughness thereof in comparison to other portions of the head 18. This might help to set a release force for releasing the fastener element 10 from the receptacle which is well-above a nominal retaining force for holding the clip 40 in the longitudinal direction but is sufficiently low in order to avoid breaking the clip 40.

The clip base 42 has a stop surface 54 which is configured to limit movements of the received head 18 within the receptacle. Particularly, the restoring force of the first elastic retaining portions 48, which acts to further "draw" the fastener element 10 into the receptacle, can be limited by such stop surface 54. The stop surface 54 may be a rounded surface adapted to the upper face radius R26.

The clip 40, further, includes at least one, preferably at least three and preferably less than seven second elastic retaining portions 56. The second elastic retaining portions 56 extend radially inwardly at an upper end of the clip 40. Each second elastic retaining portion 56 includes an engagement tip 58 which is adapted to engage the upper surface of the axial projection 30, as can be seen in Fig. 3. In other words, the engagement tips 58 of the second elastic retaining portions 56 define a circle with a diameter, which is less than the projection diameter DP.

If the fastener element 10 is inserted into the receptacle, and reaches the fixing position as shown in Fig. 4, the first elastic retaining portions 48, due to their elastic restoring force, act to further "draw" the fastener element 10 into the receptacle. On the other hand, the second elastic retaining portions 56 are deflected thereby in a direction as shown with an arrow B in Fig. 4 and thereby act on the fastener element 10 in a direction for pushing the fastener element 10 out of the receptacle. In other words, the head 18 is held elastically between the first elastic retaining portions 48 and the second elastic retaining portions 56. In an alternative setting, the head is pressed against the stop 54 by the first elastic retaining portions 56, and the second elastic retaining portions 58 mainly dampen movements of the head against the stop surface 54.

In the fixing position, the clip 40 and the fastener element 10 define a connection arrangement CA. In the connection arrangement CA, the fastener element 10 is joined to a component C, such as a sheet material. The corresponding joint (a weld joint or an adhesive joint) is shown at J.

The connection arrangement CA is adapted to define the position of a member M in relation to the component C. In some cases, the member M may be a laminar member such as a lining member which is fixed between the clip 40 and the component C. In other applications, the clip 40 may have a receptacle for receiving a longitudinal member such as a fluid tube, an electrical line, a wiring harness, etc., in which case the connection arrangement CA is adapted to fix such longitudinal member M to the component C.

In typical applications of the set of the fastener element 10 and the clip 40, the fastener element is coated, e.g. painted after having been joined to a vehicle body.

The coating thickness may vary from application to application, e.g. from vehicle type to vehicle type. The clip 40 is suitable for each of those applications, and is therefore necessarily adapted to accommodate a fastener element 10 with the thickest possible coating layer.

If the same clip would then be used in another application with a significantly thinner coating layer, rattling may occur in the prior art, i.e. if the fastener element does not have an axial projection in correspondence to the coating thickness.

Presently, the fastener element 10 is adapted to each application by providing the axial projection 30 and by setting the protrusion height LP so as to correspond to a predetermined coating thickness of a coating layer which is to be applied to the fastener element in its specific application.

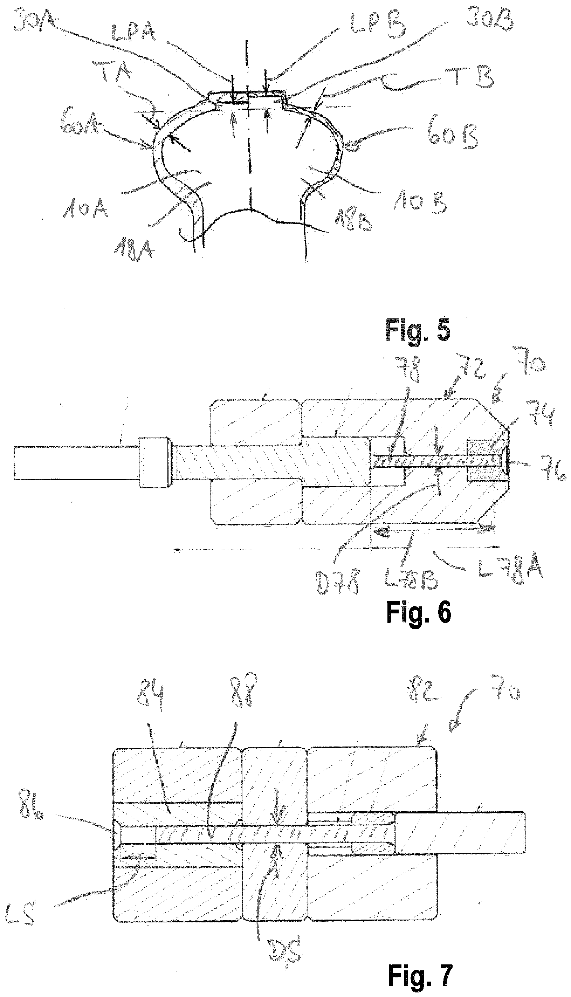

As can be seen in Fig. 5, this concept is able to compensate for varying coating thicknesses.

On the left-hand side of Fig. 5, a fastener element 10A is coated with a coating layer 60A having a thickness TA. In this case, due to the relatively thick coating layer, the fastener element 10A has an axial projection 30A with a small protrusion height LPA.

On the other hand, as shown on the right-hand side of Fig. 5, a fastener element 10B is shown to which a coating layer 60B with a small coating layer thickness TB is applied. In this case, the fastener element 10B has an axial projection 30B with a significantly larger protrusion height LPB.

The total height of the respective fastener element 10A/10B with its coating layer 60A/60B applied thereon is therefore almost constant, as is shown in Fig. 5.

This compensation may also consider the thickness of the coating layer 60 on the lower face 24 of the fastener element 10, which is not shown in Fig. 5 for clarity reasons.

Figures 6 and 7 show a tool 70 for manufacturing a fastener element 10.

The tool 70 includes a first tool part 72 shown in Fig. 6, and a second tool part 82 shown in Fig. 7.

The first tool part 72 includes a first die 74 for forming the upper face 26 and the axial projection of a fastener element 10. Particularly, the first die 74 includes a first cavity part 76 for the second head end 22 and the axial projection 30.

The first tool part 72, further, includes a first ejector pin 78 which has a diameter D78 and an axial length L78.

Particularly, the first ejector pin 78 can be exchanged depending on the height of the axial projection which is to be achieved. In Fig. 6, the first ejector pin 78 has an axial length L78A. For another application, the first ejector pin 78 may have an axial length L78B which is smaller than L78A.

The first cavity part 76 includes a larger axial part for defining an axial protrusion 30 with a relatively large projection height 30B if the first ejector pin 78 with the length 78B is chosen. In the other hand, if the fastener element 10A with the relatively small projection height LPA is to be produced, the first ejector pin 78 with the axial length L78A is used.

Fig. 7 shows the second tool part 82 which includes a second die 84 which defines a second cavity part 86. The second cavity part 86 is adapted to form the lower part of the head 18, i.e. the first head end 20, and the shaft 12 of the fastener element 10. As can be seen in Fig. 7., the second cavity part 86 includes a portion defined by a second ejector pin 88, which defines the length LS of the shaft 12.

### Reference numerals:

- 10: fastener element
- 12: shaft
- 14: first shaft end
- 16: second shaft end
- 18: head
- 20: first head end
- 22: second head end
- 24: lower face
- 26: upper face
- 28: intermediate portion
- 30: axial projection
- 40: clip
- 42: clip base
- 44: receptacle
- 46: elastic retaining arrangement
- 48: first elastic retaining portions (24)
- 50: deflection surface 48
- 52: retaining surface 48
- 54: stop surface
- 56: second elastic retaining portions (30)
- 58: engagement tip
- 60: coating layer
- 70: tool
- 72: first tool part
- 74: first die
- 76: first cavity part for 22 and 30
- 78: first ejector pin
- 82: second tool part
- 84: second die
- 86: second cavity part for 20 and 12
- 88: second ejector pin

- L: longitudinal axis
- LS: shaft length
- LH: head length
- LB: base length
- LP: protrusion height
- L26: upper face length
- DS: shaft outer diameter
- DH: head outer diameter
- DP: projection diameter
- RT1: first transition radius 14/24
- RT2: second transition radius 24/28
- R26: upper face radius
- A: deflection direction 48
- B: deflection direction
- T: coating layer thickness
- M: member (clamped between 42 and C)
- C: component
- J: joint (welding, adhesive, etc.)
- CA: connection arrangement
- α: cone angle 24
- D78: diameter 78
- L78: axial length 78

## Claims

1. A fastener element (10) for the attachment of a clip (40) in relation to a component (C) to which the fastener element (10) is joined, comprising
- a shaft (12) that extends in a longitudinal direction (L) and has a first shaft end (14) and a second shaft end (16) in the longitudinal direction, the first shaft end (14) being designed to be joined to the component C),
- a head (18) having, in the longitudinal direction(L), a first head end (20) and a second head end (22), the first head end (20) being connected to the second shaft end (16) and having a lower face (24) projecting with respect to the shaft (12) transversely to the longitudinal direction (L), the head (18) being designed to be engaged by an elastic retaining arrangement (46) of a clip (40) in a fixing position, and
- an axial projection (30) which projects in the longitudinal direction (L) with respect to the second head end (22) by a projection height (LP) greater than zero.

2. The fastener element of claim 1, wherein
- the lower face (24) of the head (18) is designed to be engaged by at least one first elastic retaining portion (48) of the elastic retaining arrangement (46), and/or
- the axial projection (30) is designed to elastically engaged by at least one second elastic retaining portion (50) of the elastic retaining arrangement (46).

3. The fastener element of claim 1 or 2, wherein the fastener element (10) is configured to be coated with a layer (60A, 60B) of a coating having a predetermined coating thickness (TA, TB), and wherein the projection height (LPA, LPB) is configured to correspond to the predetermined coating thickness (TA, TB).

4. The fastener element of claim 3, wherein the projection height (LPA, LPB) relates reciprocally to the predetermined coating thickness (TA, TB).

5. The fastener element of any one of claims 1 to 4, wherein the head (18), in a longitudinal cross-section, has an approximately elliptic shape.

6. The fastener element of any one of claims 1 to 5, wherein the axial projection (30) is a cylindrical projection.

7. The fastener element of any one of claims 1 to 6, wherein an outer diameter (DP) of the axial projection (30) is smaller than an outer diameter (DH) of the head (18), preferably smaller than an outer diameter (DS) of the shaft (12).

8. The fastener element of any one of claims 1 to 7, wherein
- a ratio of an outer diameter (DP) of the axial projection (30) to an outer diameter (DH) of the head (18) is in a range from 0.25 to 0.7, and/or
- a ratio of an outer diameter (DP) of the axial projection (30) to an outer diameter (DS) of the shaft (12) is in a range from 0.4 to 0.95, and/or
- a ratio of the axial length (LH) of the head (18) to the projection height (LP) is in a range from 152 to 1.9.

9. The fastener element of any one of claims 1 to 8, wherein
- the lower face (24) of the head (18) comprises an annular conical face portion with a cone angle (α) in a range from 90° to 130°, and/or
- the lower face (24) of the head (18) comprises a roughened portion having an increased surface roughness,
- a ratio of an outer diameter of the head to an outer diameter of the shaft is in a range from 0.4 to 0.75.

10. A set of a fastener element (10) of any one of claims 1 to 9 and a plastic clip (40), wherein the clip (40) has an elastic retaining arrangement (46) for axially retaining the clip (40) on the head (18) of the fastener element (10).

11. The set of claim 10, wherein the clip (40) comprises an elastic retaining arrangement (46) which includes at least one first elastic retaining portion (48) for engaging a lower face (24) of the head (18) of the fastener element (10), and at least one second elastic retaining portion (50) for engaging the axial projection (30) of the fastener element.

12. The set of claim 11, wherein the at least one first elastic retaining portion (48) and the at least one second elastic retaining portion (50) are configured to perform respective axial retaining forces on the head (18) of the fastener element (10), which act in opposite directions.

13. The set of any one of claims 10 to 13, wherein the clip includes a receptacle (44) for receiving the head (18) of the fastening element (10), and wherein the receptacle includes a stop surface (54) which is configured to limit movements of the received head (18) by the at least one first elastic retaining portion (48).

14. A method for manufacturing a fastener element (10) which has a head (18) and an axial projection (30) projecting from a surface of the head (18), particularly a fastener element (10) of any one of claims 1 to 9, comprising the steps:
- determining/selecting a projection height (LPA, LPB) of the axial projection (30) so as to correspond to a predetermined coating thickness (TA, TB) of a coating layer (60A, 60B) which is to be applied to the fastener element (10), and
- manufacturing the fastener element (10) with the determined projection height (LPA, LPB).

15. A method of producing a connection arrangement (CA), comprising the steps:
- providing a fastener element (10) of any one of claims 1 to 9,
- joining the fastener element (10) to a component (C),
- coating the component (C) with the fastener element (10) joined thereto, and
- attaching a clip (40) to the fastener element (10) so as to produce the connection arrangement (CA).
